# EUROPEAN PATENT SPECIFICATION

(11) **EP 1 540 452 B1**
(45) Date of publication and mention of the grant of the patent: **24.08.2011**
(21) Application number: 03762371.7
(22) Date of filing: 03.07.2003
(51) Int. Cl.: G06F 3/023, G06F 3/00

(54) **SYSTEM AND METHOD FOR INTELLIGENT TEXT INPUT IN A MOBILE DEVICE**
SYSTEM UND VERFAHREN ZUR INTELLIGENTEN TEXTEINGABE IN EINER MOBILEN EINRICHTUNG
SYSTEME PERMETTANT UNE ENTREE INTELLIGENTE DE TEXTE ET PROCEDE AFFERENT

(30) Priority: 03.07.2002 US 393949 P; 01.08.2002 US 400752 P; 01.08.2002 CA 2396421; 01.07.2003 US 611519
(43) Date of publication of application: 15.06.2005
(73) Proprietor: Research in Motion Limited, Waterloo, Ontario N2L 3W8 (CA)
(72) Inventor: FUX, Vadim, Waterloo, Ontario N2K 2A4 (CA); MAZUR, Arie, V., Toronto, Ontario M2L 1L8 (CA)
(74) Representative: MERH-IP Matias Erny Reichl Hoffmann
(86) International application number: PCT/CA2003/001022
(87) International publication number: WO 2004/006081

(56) References cited:
- EP-A- 1 085 401
- WO-A-01/29976
- US-A- 4 559 615
- US-A- 5 952 942

## Description

### CROSS-REFERNECE TO RELATED APPLICATION

This application claims priority from and is related to the following prior applications: "System for Intelligent Text Input," United States Provisional Application No. 60/393,949, filed July 3, 2002; and "Text Input," United States Provisional Application No. 60/400,752, filed August 1, 2002.

### FIELD

The technology described in this patent document relates generally to computer text input. More specifically, this document describes a system and method for intelligent text input that is particularly well-suited for use in wireless two-way messaging devices, cellular telephones, personal digital assistants (PDAs), or other types of mobile devices, but that may also have utility in other devices, such as a set-top box or video conference equipment.

### BACKGROUND

The growing use of mobile devices challenges developers and manufacturers to create products that maximize device resources without significantly limiting device performance. One key element in the efficient design of a mobile device is the user interface, which typically includes one or more input components for entering text. However, typical text input components suffer from efficiency concerns, especially when dealing with the limited resources of a mobile device of when text in input in multiple languages.

EP 1085401 relates to the problem of efficiently entering Chinese characters on a mobile device using a restricted number of keys available on such a device. It suggests a method that combines a low number of keystrokes with a low Input Cording Redundancy Rate (ICRR), i.e. a short candidate list, in order to find a particular Chinese character in a most efficient way. The method proposed is limited to a shingle language at a time and traditional 12 key telephone keypads.

### SUMMERY

In accordance with the teachings described herein, systems and methods are provided for intelligent text input. A plurality of text input components are used to receive text input events form an input device. A text input directing engine is used to translate a text input event into a platform-independent event. The platform-independent event includes an index value that represents the text input event. A plurality of input methods are used, with each input method being operable to receive the platform-independent event from the text input directing engine and translate the platform-independent event into one or more input method specific characters of a different language based on the index value. The one or more characters generated by the input method(s) are displayed on a graphical user interface by one of the text input components.

### BRIEF DESCRIPTION OF THE DRAWINGS

Fig: 1 is a block diagram of an example system for intelligent text input form a plurality of text input components;
Fig. 2 is a block diagram illustrating an example text input directing engine;
Fig. 3 is a top-view of an example mobile device having a telephone-style keypad for inputting text;
Fig. 4 is a top-view of an example mobile device having a reduced QWERTY-style keyboard for inputting text;
Fig. 5 is a top-view of an example mobile device having a touch screen for inputting text;
Fig. 6 is a block diagram of an example text input-directing engine having loading and unloading mechanisms;
Fig. 7 is a block diagram of an example system for intelligent text input having an application specific text input component; and
Fig. 8 illustrates example application specific text input components for an electronic messaging application.

### DETAILED DESCRIPTION

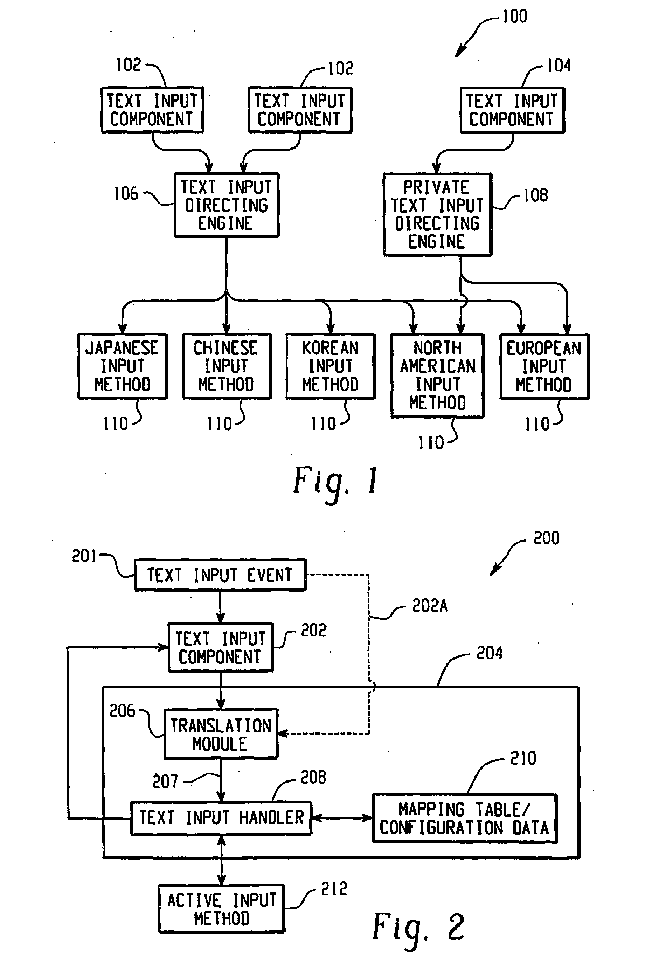

With reference now to the drawing figures, Fig. 1 is a block diagram of an example system 100 for intelligent text input from a plurality of text input components 102, 104. The system 100 includes the plurality of text input components 102, 104, a text input directing engine 106, and a plurality of input methods 110. Operationally, the system 100 provides an application programming interface (API) between the input methods 110 and the text input components 102, 104, such that both may be maintained and operated independently.

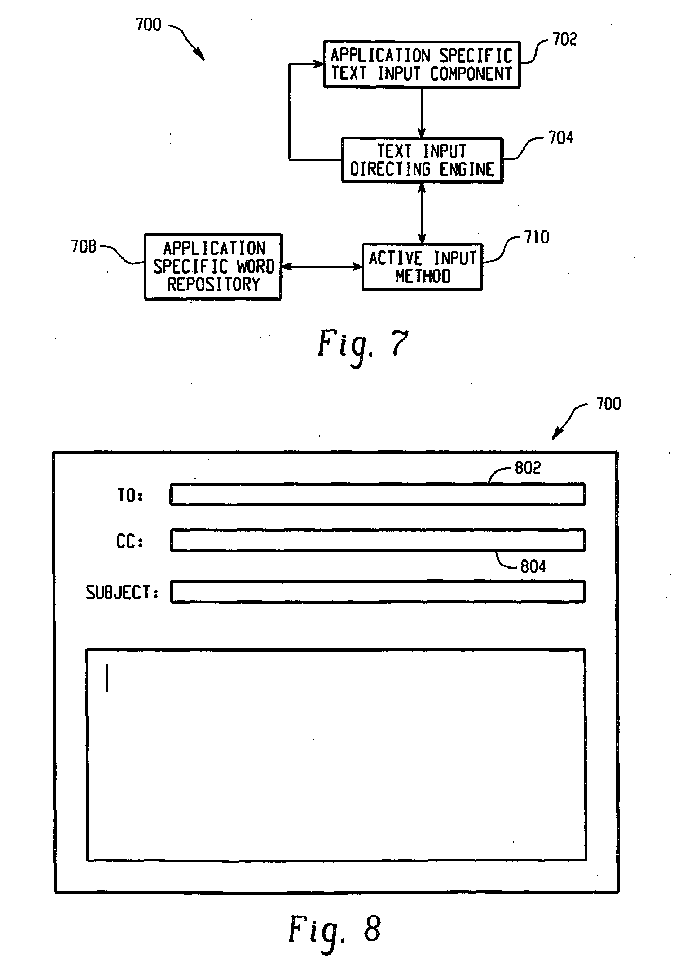

The text input components 102, 104 are fields in a user interface that accept and display input from one or more user input device, such as a miniature keyboard, a telephone-type keypad, a virtual keyboard appearing on a touch screen or touchpad, or other input devices. For example, in an electronic messaging application, examples of text input components 102, 104 may include the recipient ("TO") field, the copy ("CC") field and the message text field. (See, e.g., Fig. 8).

The text input directing engine 106 converts text input events from the text input components 102 into platform-independent events, and directs the platform independent events to an active input method 110. The text input directing engine 106 may, for example, translate a text input event into an index value, and encapsulate the index value into a platform-independent event along with additional event data, such as the time that the text input event occurred, the number of times that the text input event was repeated, the type of input device, the state of the input device (e.g., shift or alt keys depressed), or other relevant event information. For instance, if a user depresses a key to enter a character into a text input component 102, then the text input directing engine 106 may translate this text input event into an index value corresponding to the particular key depressed. In addition, the text input directing engine 106 may indicate that the particular key was depressed repeatedly or held for a certain amount of time and may also indicate the time at which the key was depressed. The operation of an example text input directing engine 106 is described in more detail below with reference to Fig. 2.

The input methods 110 may map the platform-independent events to particular characters or sets of characters. For example, the input methods 110 may each map different language characters to the same platform-independent event. A particular input method 110 may thus be activated by a device user based on a desired language for the text displayed by the text input component 102. For example, one of the input methods 110 may be defined as the active input method for a particular text input component based on user input or based on the last active input method used. In addition, an input method(s) 110 may apply input logic or other functions to the characters or sets of characters, and may produce the resulting text, along with any variants, to the text input component 102 for display.

Also illustrated in Fig. 1 is a private text input directing engine 108, which may be used by a text input component 104 that is independent of other text input components 102. For example, an independent text input component 104 may require text to be entered in a different language or in another format than other text input components 102. In the case of an electronic messaging application, for instance, the recipient ("TO") field may be an independent text input component 102 requiring text to be entered using an English language input method 110, while other text input components, such as the message text field, may utilize a different input method 110.

Fig. 2 is a block diagram 200 illustrating an example text input directing engine 204. Fig. 2 illustrates a text input event 201 that is entered into a text input component 202 and received by the text input directing engine 204. Alternatively, the text input event 201 may bypass 202A the text input component 202, for example if the text input component 202 is not in focus, and may be directed from an input device directly to the text input directing engine 204. The text input directing engine 204 includes a translation module 206, a text input handler 208, and a memory location 210 having a mapping table or other configuration data.

The translation module 206 converts the text input event 201 into a platform-independent event. As noted above, the platform-independent event generated by the translation module 206 may include an index value corresponding to the particular text input event 201 along with additional event data, such as the time that the text input event occurred, the number of times the text input event was repeated, or other relevant event information. In addition, the system 200 is preferably adaptable to different types of input devices, such as a keyboard, telephone-type keypad, touch screen, or others. Therefore, the translation module 206 may also identify the type of input device and may include device-specific information in the platform-independent event, such as an identification of the input device and the state of the input device (e.g., normal key layout, shift key layout, control key layout, etc.).

The platform-independent event generated by the translation module 206 is received by the text input handler 208. The text input handler 208 accesses a mapping table 210 or other stored configuration data to associate the platform-independent event with a particular character or set of characters. For example, the text input directing engine 204 may include mapping tables 210 specific to each available input method and type of input device. The text input handler 208 may select the applicable mapping table 210 for a particular platform-independent event based on the currently active input method 212 for the text input component 202 and also based on the type of input device used to create the text input event 201. In this manner, simultaneous inputs may be received and processed from different types of input devices. Moreover, the mapping table 210 or other configuration data may be stored in an editable format, enabling input device configurations to be easily added or modified.

Upon converting the platform-independent event into one or more corresponding characters, the text input handler 208 accesses the active input method 212 to apply input logic or other functions associated with the particular input method 212. For example, in one embodiment, the active input method may have access to a store of linguistic data that may be used to predict additional characters that are likely be associated with the text input event 201. For instance, the active input method 212 may access a word list, such as an address book, to predict a complete word or phrase from a partial word or phrase entered into the text input component 202. In addition, the input method 212 may provide for state-full text input by remembering the current and previous state(s) of the text input. The text input handler 208 then produces the resulting characters, along with any variants, to the text input component 202 for display.

In one embodiment, the mapping table 210 or other configuration data may be included as part of the active input method 212, as described above with reference to Fig. 1. In this case, each input method 110 may include a language specific mapping table 210 or other type of configuration data, or alternatively each input method 110 may access a common store of mapping tables 210 or other configuration data. The active input method 212 may then be accessed by the text input handler 208 to both translate the platform-independent event into one or more corresponding characters using the mapping table 210 and to apply any language or input method specific logic to the resultant textual data.

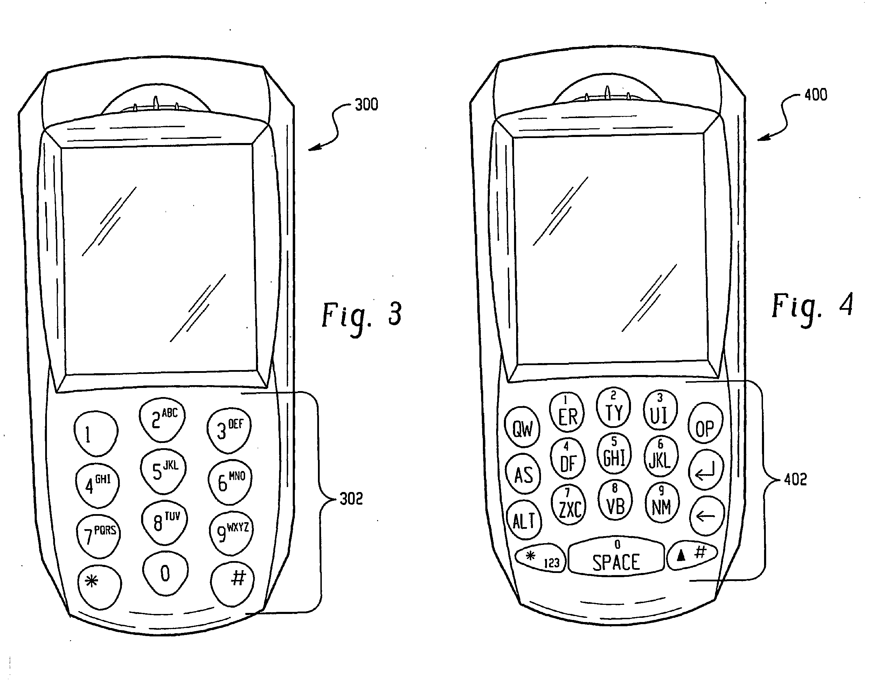

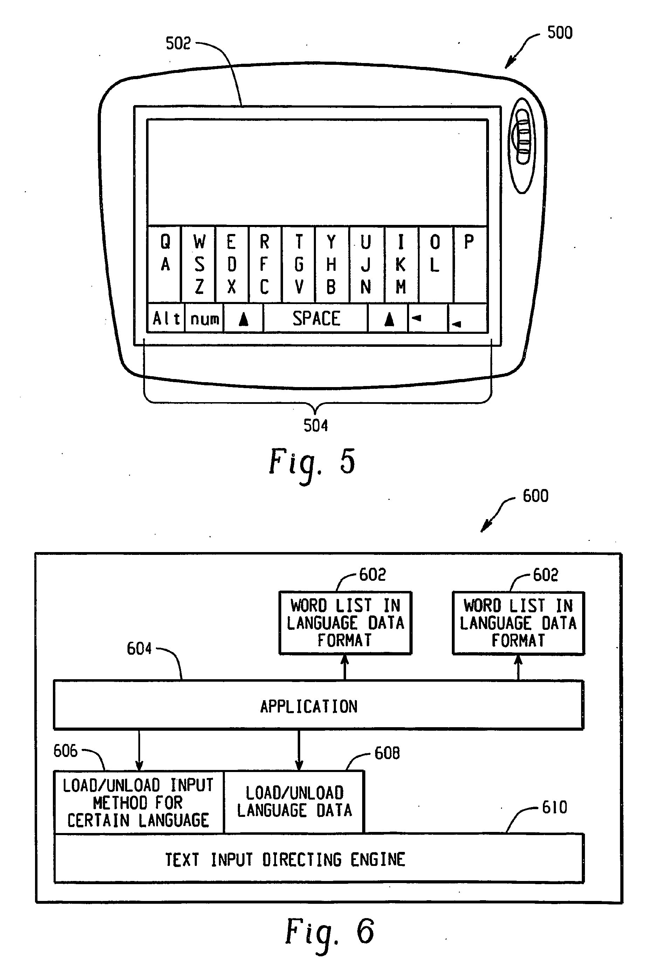

Figs. 3-5 illustrate example mobile devices having different input devices. Fig. 3 is a top-view of an example mobile device 300 having a telephone-style keypad 302 for entering text. Fig. 4 is a top-view of an example mobile device 400 having a reduced QWERTY-style keyboard 402 for entering text. Fig. 5 is a top-view of an example mobile device 500 having a touch screen 502 for entering text on a virtual keyboard 504. Each of the example input devices shown in Figs. 3-5 may have a corresponding mapping table 210 within the text input directing engine 204.

Fig. 6 is a block diagram of an example text input directing engine 610 having loading and unloading mechanisms 606, 608. Also illustrated in Fig. 6 are a device application 604 and a plurality of word lists 602. The word lists 602 may include linguistic information or other types of textual data for use by one or more device applications 604, such as a calendar application, an electronic messaging application, an address book application or others. For example, one word list 602 may include address book data, such as email addresses, that may be accessed to input text into fields in an electronic messaging application. Also, as noted above, one or more word lists 602 may be accessed by the active input method 212 to predict a complete word or phrase from a partial input or to perform other input logic functions.

The loading and unloading mechanisms 606, 608 include a first loading and unloading mechanism 606 for loading and deleting input methods 110 to and from device memory and a second loading and unloading mechanism 608 for loading and deleting word lists 602 to and from device memory. Such dynamic loading and unloading of input methods 110 and linguistic data 602 may, for example, be employed to conserve device memory and extend the existing system with new or modified data or logic without significant interfering with the rest of the system.

Fig. 7 is a block diagram of an example system 700 for intelligent text input having an application specific text input component 702. An application specific text input component 702 is restricted to certain types of textual input. For example, Fig. 8 illustrates an example graphical user interface (GUI) 800 for an electronic messaging application. The recipient ("TO") field 802 and the copy ("CC) field 804 in this example electronic messaging GUI are examples of potential application specific text input components 702. For instance, the recipient and copy fields 802, 804 may be restricted to text input in the form of an electronic mail address.

With reference again to Fig. 7, upon receiving an input-restricted text input event from the application specific text input component 702, the text input directing engine 704 converts the text input event into a platform-independent event and associates the platform-independent event with one or more corresponding characters from a language and device specific mapping table, as described above. The text input directing engine 704 then accesses the active input method 710 to apply language specific input logic functions. In addition, data from an application specific word repository may be loaded to the active input method 710 to apply input logic pertaining to the particular application specific text input component 702. For example, an application specific word repository 708 may be defined based on a particular word list 602 that is applicable to the application specific text input component 702. In the example illustrated in Fig. 8, for instance, an application specific word repository 708 defined from an address book word list may be loaded to the active input method 710 when text is entered into the recipient ("TO") or copy ("CC") text input components 702. In this manner, the active input method 710 may predict user input in the specific application field with added efficiency and with a higher degree of accuracy.

This written description uses examples to disclose the invention, including the best mode, and also to enable a person skilled in the art to make and use the invention. The patentable scope of the invention may include other examples that occur to those skilled in the art.

## Claims

1. An intelligent text input system (100) for a mobile device, comprising:
a plurality of text input components (102), each text input component (102) being operable to receive a text input event from an input device;
a text input directing engine (106) operable to receive the text input event from each of the plurality of text input components (102) and translate the text input event into a platform-independent event, the platform-independent event Including an index value that represents the text input event;
a plurality of input methods (110), each input method (110) being associated with an input language and being further operable to receive the platform-independent event from the text input directing engine (106) and translate the platform-independent event into one or more input method specific characters based on the index value; and
the text input directing engine (106) being further operable to direct the platform-independent event to one of the plurality of input methods (110) based on the text input component (102) that received the text input event;
wherein the one or more input method specific characters is displayed on a graphical user interface by one of the text input components (102),

2. The system of claim 1, wherein the text input directing engine (106) associates an active input method with one or more text input component (102).

3. The system of claim 2, wherein the text input directing engine (106) directs the platform-independent event to the active input method.

4. The system of claim1, wherein the platform-independent event includes event data indicating the state of the input device.

5. The system of claim 1, wherein the platform-independent event includes event data indicating the time at which the text input event was received from the input device.

6. The system of claim 1, wherein the platform-Independent event includes event data indicating the number of consecutive occurrences of the text input event.

7. The system of claim 1, wherein at least one input method (110) applies an input logic function to predict a complete word or phrase from the one or more input method specific characters.

8. The system of claim 7, wherein the one input method accesses a word list associated with one or more of the text input components (102) to predict the complete word or phrase.

9. The system of claim 1, wherein the input device is a telephone-style keypad.

10. The system of claim1, wherein the input device is a miniature keyboard.

11. The system of claim 1, wherein the input device is a virtual keyboard on a touch screen user interface.

12. The system of claim 1, further comprising:
a loading and unloading mechanism operable to remove one or more of the input methods from the mobile device and add one or more additional input methods to the mobile device.

13. A method of processing a text input event in a mobile device, comprising:
receiving a text input event from one of a plurality of text input components (102);
translating the text input event into a platform-independent event that includes an index value that represents the text input event;
directing the platform-independent event to an active Input method selected from a plurality of input methods (110), the platform-independent event being directed to the active Input method based on the text input component (102) that received the text input event, each input method (110) being associated with an input language;
translating the platform-independent event into one or more input method specific characters based on the index value; and
displaying the one or more input method specific characters on a graphical user interface by one of the text input components (102).

14. The method of claim 13, further comprising:
predicting a complete word or phrase from the one or more input method specific characters.

15. A mobile device including an input device, a graphical user interface, and an intelligent text input system according to one of claims 1 to 12.

16. The mobile device of claim 15, further comprising:
means for predicting a complete word or phrase from the one or more input method specific characters.

## Patentansprüche

1. Intelligentes Texteingabesystem (100) für eine mobile Vorrichtung, das aufweist:
eine Vielzahl von Texteingabekomponenten (120), wobei jede Texteingabekomponente (120) betriebsfähig ist zum Empfangen eines Texteingabeereignisses von einer Eingabevorrichtung;
eine Texteingabeleitmaschine (106), die betriebsfähig ist zum Empfangen des Texteingabeereignisses von jeder der Vielzahl von Texteingabekomponenten (120) und Umwandeln des Texteingabeereignisses in ein Plattform-unabhängiges Ereignis, wobei das Plattform-unabhängige Ereignis einen Indexwert umfasst, der das Texteingabeereignis repräsentiert;
eine Vielzahl von Eingabeverfahren (110), wobei jedes Eingabeverfahren (110) zu einer Eingabesprache gehört und weiter betriebsfähig ist zum Empfangen des Plattform-unabhängigen Ereignisses von der Texteingabeleitmaschine (106) und Umwandeln des Plattform-unabhängigen Ereignisses in ein oder mehrere für das Eingabeverfahren spezifische Zeichen basierend auf dem Indexwert; und
wobei die Texteingabeleitmaschine (106) weiter betriebsfähig ist, das Plattform-unabhängige Ereignis an eines der Vielzahl von Eingabeverfahren (110) zu leiten basierend auf der Texteingabekomponente (102), die das Texteingabeereignis empfangen hat;
wobei das eine oder die mehreren für das Eingabeverfahren spezifischen Zeichen auf einer graphischen Benutzerschnittstelle durch eine der Texteingabekomponenten (102) angezeigt wird/werden.

2. System gemäß Anspruch 1, wobei die Texteingabeleitmaschine (106) ein aktives Eingabeverfahren einer oder mehreren Texteingabekomponente(n) (102) zuordnet.

3. System gemäß Anspruch 2, wobei die Texteingabeleitmaschine (106) das Plattform-unabhängige Ereignis an das aktive Eingabeverfahren leitet.

4. System gemäß Anspruch 1, wobei das Plattform-unabhängige Ereignis Ereignisdaten umfasst, die den Zustand der Eingabevorrichtung anzeigen.

5. System gemäß Anspruch 1, wobei das Plattform-unabhängige Ereignis Ereignisdaten umfasst, die die Zeit anzeigen, an der das Texteingabeereignis von der Eingabevorrichtung empfangen wurde.

6. System gemäß Anspruch 1, wobei das Plattform-unabhängige Ereignis Ereignisdaten umfasst, die die Anzahl eines aufeinanderfolgenden Auftretens des Texteingabeereignisses anzeigen.

7. System gemäß Anspruch 1, wobei zumindest ein Eingabeverfahren (110) eine Eingabelogikfunktion anwendet, um ein vollständiges Wort oder einen Ausdruck aus dem einen oder den mehreren für das Eingabeverfahren spezifische(n) Zeichen vorherzusagen.

8. System gemäß Anspruch 7, wobei das eine Eingabeverfahren auf eine Wortliste zugreift, die zu einer oder mehreren der Texteingabekomponenten (102) gehört, um das vollständige Wort oder den Ausdruck vorherzusagen.

9. System gemäß Anspruch 1, wobei die Eingabevorrichtung eine Telefon-Tastatur ist.

10. System gemäß Anspruch 1, wobei die Eingabevorrichtung eine Miniatur-Tastatur ist.

11. System gemäß Anspruch 1, wobei die Eingabevorrichtung eine virtuelle Tastatur auf einer Berührungsbildschirm-Benutzerschnittstelle ist.

12. System gemäß Anspruch 1, das weiter aufweist:
einen Belade- und Entlademechanismus, der betriebsfähig ist zum Entfernen eines oder mehrerer der Eingabeverfahren von der mobilen Vorrichtung und zum Hinzufügen eines oder mehrerer zusätzlicher Eingabeverfahren zu der mobilen Vorrichtung,

13. Verfahren zum Verarbeiten eines Texteingabeereignisses in einer mobilen Vorrichtung, das aufweist:
Empfangen eines Texteingabeereignisses von einer aus einer Vielzahl von Texteingabekomponenten (102);
Umwandeln des Texteingabeereignisses in ein Plattform-unabhängiges Ereignis, das einen Indexwert umfasst, der das Texteingabeereignis repräsentiert;
Leiten des Plattform-unabhängigen Ereignisses an ein aktives Eingabeverfahren, das aus einer der Vielzahl von Eingabeverfahren (110) ausgewählt wird, wobei das Plattform-unabhängige Ereignis an das aktive Eingabeverfahren geleitet wind basierend auf der Texteingabekomponente (102), die das Texteingabeereignis empfangen hat, wobei jedes Eingabeverfahren (110) zu einer Eingabesprache gehöft;
Umwandeln des Plattform-unabhängigen Ereignisses in ein oder mehrere für das Eingabeverfahren spezifische Zeichen basierend auf dem Indexwert; und
Anzeigen des einen oder der mehreren für das Eingabeverfahren spezifischen Zeichen auf einer graphischen Benutzerschnittstelle durch eine der Texteingabekomponenten (102).

14. Verfahren gemäß Anspruch 13, das weiter aufweist Vorhersagen eines vollständigen Worts oder eines Ausdrucks aus dem einen oder den mehreren für das Eingabeverfahren spezifischen Zeichen.

15. Mobile Vorrichtung, die eine Eingabevorrichtung, eine graphische Benutzerschnittstelle und ein intelligentes Texteingabesystem gemäß einem der Ansprüche 1 bis 12 umfasst.

16. Mobile Vorrichtung gemäß Anspruch 15, die weiter aufweist:
Mittel zum Vorhersagen eines vollständigen Worts oder eines Ausdrucks aus dem einen oder den mehreren für das Eingabeverfahren spezifischen Zeichen.

## Revendications

1. Système intelligent (100) d'entrée de texte pour un dispositif mobile, comprenant :
une pluralité de composants (102) d'entrée de texte, chaque composant (102) d'entrée de texte étant utilisable pour recevoir, d'un dispositif d'entrée, un événement d'entrée de texte ;
un moteur (106) d'orientation d'entrée de texte utilisable pour recevoir l'événement d'entrée de texte de chacun de la pluralité de composants (102) d'entrée de texte est pour traduire l'événement d'entrée de texte en un événement indépendant de la plate-forme, l'événement indépendant de la plate-forme incluant une valeur d'index qui représente l'événement d'entrée de texte ;
une pluralité de méthodes (110) d'entrée, chaque méthode (110) d'entrée étant associée à un langage d'entrée et étant en outre utilisable pour recevoir l'événement indépendant de la plate-forme provenant du moteur (106) d'orientation d'entrée de texte et pour traduire, en se basant sur la valeur d'index, l'événement indépendant de la plate-forme en un ou plusieurs caractères spécifiques à la méthode d'entrée, et
le moteur (106) d'orientation d'entrée de texte étant en outre utilisable pour, en se basant sur le composant (102) d'entrée de texte qui a reçu l'événement d'entrée de texte, orienter l'événement indépendant de la plate-forme vers une de la pluralité de méthodes (110) d'entrée,
dans lequel les un ou plusieurs caractères spécifiques à la méthode d'entrée sont affichés sur une interface graphique d'utilisateur par un des composants (102) d'entrée de texte.

2. Système selon la revendication 1, dans lequel le moteur (106) d'orientation d'entrée de texte associe une méthode d'entrée active avec un ou plusieurs composants (102) d'entrée de texte.

3. Système selon la revendication 2, dans lequel le moteur (106) d'orientation d'entrée de texte oriente l'événement indépendant de la plate-forme vers la méthode d'entrée active.

4. Système selon la revendication 1, dans lequel l'événement indépendant de la plate-forme inclut une donnée d'événement indiquant l'état du dispositif d'entrée.

5. Système selon la revendication 1, dans lequel l'événement indépendant de la plate-forme inclut, une donnée d'événement indiquant le moment auquel l'événement d'entrée de texte a été reçu du dispositif d'entrée.

6. Système selon la revendication 1, dans lequel l'événement indépendant de la plate-forme une donnée d'événement indiquant le nombre d'occurrences consécutives de l'événement d'entrée de texte.

7. Système selon la revendication 1, dans lequel au moins une méthode (110) d'entrée applique une fonction logique d'entrée pour prédire, à partir des un ou plusieurs caractères spécifiques à la méthode d'entrée, un mot complet ou une phrase complète.

8. Système selon la revendication 7, dans lequel ladite une méthode d'entrée accède à une liste de mots associée à un ou plusieurs des composants (102) d'entrée de texte pour prédire le mot complet ou la phrase complète.

9. Système selon la revendication 1, dans lequel le dispositif d'entrée est un pavé de touches du style téléphone.

10. Système selon la revendication 1, dans lequel le dispositif d'entrée est un clavier miniature.

11. Système selon la revendication 1, dans lequel le dispositif d'entrée est un clavier virtuel sur une interface d'utilisateur à écran tactile.

12. Système selon la revendication 1, comprenant en outre :
un mécanisme de chargement et de déchargement utilisable pour retirer, du dispositif mobile, une ou plusieurs des méthodes d'entrée et pour ajouter, au dispositif mobile, une ou plusieurs méthodes additionnelles d'entrée.

13. Procédé de traitement d'un événement d'entrée de texte dans un dispositif mobile, comprenant :
la réception d'un événement d'entrée de texte en provenance d'un d'une pluralité de composants (102) d'entrée de texte ;
la traduction de l'événement d'entrée de texte en un événement indépendant de la plate-forme qui inclut une valeur d'index qui représente l'événement d'entrée de texte ;
l'orientation de l'événement indépendant de la plate-forme vers une méthode d'entrée active choisie à partir d'une pluralité de méthodes (110) d'entrée, l'événement indépendant de la plate-forme étant dirigé vers la méthode d'entrée active en se basant sur le composant (102) d'entrée de texte qui a reçu l'événement d'entrée de texte, chaque méthode (110) d'entrée étant associée à un langage d'entrée ;
la traduction, en se basant sur la valeur d'index, de l'événement indépendant de la plate-forme en un ou plusieurs caractères spécifiques à la méthode d'entrée ; et
l'affichage, sur une interface graphique d'utilisateur, des un ou plusieurs caractères spécifiques à la méthode d'entrée par un des composants (102) d'entrée de texte.

14. Procédé selon la revendication 13, comprenant en outre :
la prédiction, à partir des un ou plusieurs caractères spécifiques à la méthode d'entrée, d'un mot complet ou d'une phrase complète.

15. Dispositif mobile incluant un dispositif d'entrée, une interface graphique d'utilisateur et un système intelligent d'entrée de texte selon l'une des revendications 1 à 12.

16. Dispositif mobile selon à revendication 15, comprenant en outre :
un Moyen destiné à prédire, à partir des un ou plusieurs caractères spécifiques à la méthode d'entrée, un mot complet ou une phrase complète.
